(19) **Europäisches Patentamt / European Patent Office / Office européen des brevets**

(11) **EP 2 169 627 A2**

(12) # EUROPEAN PATENT APPLICATION

(43) Date of publication:
31.03.2010 Bulletin 2010/13

(51) Int Cl.:
*G06T 17/20* (2006.01)

(21) Application number: 09171132.5

(22) Date of filing: 23.09.2009

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA RS

(30) Priority: 24.09.2008 JP 2008244946

(71) Applicant: CANON KABUSHIKI KAISHA
Ohta-ku
Tokyo 146-8501 (JP)

(72) Inventor: Tateno, Keisuke
Tokyo (JP)

(74) Representative: Hitching, Peter Matthew
Canon Europe Ltd
European Patent Department
3 The Square
Stockley Park
Uxbridge, Middlesex UB11 1ET (GB)

(54) **Model generation apparatus and method**

(57)    To estimate a position and orientation of an image pickup device relative to an object to be observed, a model generation apparatus (1) includes an acquisition unit (130) configured to acquire a depth image representing a distance between a certain point and an object to be observed per pixel with three-dimensional information representing a shape of the object to be observed, a point group generation unit (140) configured to generate three-dimensional point group data representing the shape of the object to be observed based on the depth image, and a model generation unit (150) configured to generate a three-dimensional model representing the shape of the object to be observed as surface information based on the three-dimensional point group data.

FIG. 1

**Description**

BACKGROUND OF THE INVENTION

Field of the Invention

The present invention relates to a technique for measuring a relative position and orientation between an image pickup device and an object to be observed, by using three-dimensional (3D) model data representing a surface shape of the object to be observed and an image of the object to be observed captured by the image pickup device. In particular, the present invention relates to a position-and-orientation estimation model generation apparatus generating a 3D model suitable for position and orientation estimation, a position and orientation calculation apparatus, and an image processing apparatus using these apparatuses.

Description of the Related Art

Conventionally, there is proposed a technique for measuring a relative position and orientation between an object to be observed and an image pickup device, such as a camera capturing a real space image, which captures an image of the object to be observed. This type of measuring technique is very useful in developing a mixed reality (MR) system in which the real space and the virtual space are mixed and displayed or measuring the position and orientation of robots.

Conventionally, a method for determining the position and orientation of an image pickup device based on the correspondence between edges of a captured image and a 3D line segment model of an object to be observed has been proposed. A captured image of such object to be observed includes regions in which observed luminance changes discontinuously, and such regions are named "edges." Since these edges do not depend on the scale or the observation direction, use of the edges enables a highly accurate position adjustment. Document 1 (T. Drummond and R. Cipolla, "Real-time visual tracking of complex structures," IEEE Transactions on Pattern Analysis and Machine Intelligence, vol. 24, no. 7, pp. 932-946, 2002) discusses a position adjustment using such edges which is carried out as follows:

First, based on the position and orientation of a camera in the previous frame and intrinsic parameters of a camera calibrated in advance, the above 3D line segment model is projected on an image. Next, each of the lines projected is regularly divided on the image to set division points. For each of the division points, edge detection is carried out on a line (detection line) passing through a division point and extending in a direction normal to the projected line. A point that has a maximum luminance gradient and that is closest to a division point on the detection line is detected as a correspondence edge. While the distance between a correspondence edge detected for each division point and a corresponding projected line on the image is obtained, correction values of the position and orientation of the camera are calculated so that the sum of the distances is minimum. In this way, the position and orientation of the camera is corrected.

According to a position and orientation estimation method based on edge information, edges extracted from an object to be observed displayed on a captured image and edges forming a 3D model representing the shape of the object to be observed are associated, and the position and orientation are estimated so that the associated edges are superimposed on an image plane. Thus, a 3D model accurately representing the shape of an object to be observed is necessary. However, it is relatively complex to manually create a 3D model that can be superimposed on an actual object to be observed, thereby requiring a great deal of time.

Meanwhile, in the field of industrial products, a computer aided design (CAD) model is created at a product design stage. Thus, in some cases, a 3D model representing the shape of an object to be observed has already been created. If a 3D model of an object to be observed is previously created and can be used for position and orientation estimation, the above cost for creating a 3D model can be reduced.

However, since the position and orientation estimation using edges requires a 3D model including 3D edge information to be associated with edges extracted from a captured image, a general CAD model cannot be used as it is. There are a variety of CAD model formats, such as a mesh model described with points and surfaces and a solid model described with parametric surfaces, and the shape of a CAD model varies depending on the format thereof. Also, it is not rare that shape information does not include 3D edge information necessary for the position and orientation. Thus, to estimate the position and orientation with a CAD model, it is necessary to extract information necessary for the position and orientation estimation from a CAD model. Alternatively, a CAD model needs to be converted into a position and orientation estimation model.

Simply put, when CAD model data is used for the position and orientation estimation, internal data of a CAD model is analyzed and data necessary for the position and orientation estimation is extracted to generate a position-and-orientation estimation model. However, this method requires high operating cost for analyzing internal data of the CAD model, and thus, it is difficult to accommodate various model formats.

Japanese Patent Application Laid-Open No. 2007-207251 discusses a method for rendering a CAD model and generating a position-and-orientation estimation model. According to the method, a CAD model is rendered in advance from a plurality of different viewpoints and based on different light source settings, and edges are extracted from a shaded image of the rendered CAD model. By projecting edges that can be stably detected from a plurality of viewpoints on the model coordinate system, a 3D model formed of only the stably detected edges is generated. In this way, if a CAD model can be rendered, a position and orientation estimation edge model can be created based on the CAD model, and namely, the above cost for creating a position-and-orientation estimation model can be reduced. Further, since a position-and-orientation estimation model can be generated from the rendering results of a CAD model, there is no need to analyze the CAD model unnecessarily, and an existing rendering engine can be used.

Document 2 (G. Bleser, H. Wuest, D. Stricker, "Online camera pose estimation in partially known and dynamic scenes," Proc. The 5th IEEE/ACM International Symposium on Mixed and Augmented Reality (ISMAR06), pp. 56-65, 2006) discusses a position and orientation estimation method directly using a CAD model. In this method, a 3D model is rendered in real time according to the position and orientation of an object to be observed which is captured by an image pickup device. Edges extracted from a depth buffer representing the depth of the rendered 3D model are associated with edges extracted from the object to be observed which is captured on a captured image, and in this way, the position and orientation are estimated. Thus, since a CAD model is rendered in real time and features used for the position and orientation estimation are extracted from the rendered CAD model as needed, there is no need to convert the CAD model into a position-and-orientation estimation model. Namely, in this method, the CAD model is directly used to estimate the position and orientation. Further, as in the above Japanese Patent Application Laid-Open No. 2007-207251, since this method uses rendering results of a CAD model, an existing rendering engine can be used. Thus, the cost for preparing a CAD model can be reduced.

According to the method discussed in Japanese Patent Application Laid-Open No. 2007-207251, a CAD model is rendered in advance from a plurality of viewpoints, and edges constantly and stably detected from the rendered CAD model are selected to generate a position and orientation estimation model. Thus, when the direction in which the CAD model is observed is changed, since edges hidden by the object are determined to be unstably detected edges, such edges are eliminated. As a result, the edges hidden by the object itself cannot be modeled. Namely, according to this method, the object cannot be observed in an arbitrary direction. Furthermore, since the generated position-and-orientation estimation model is formed by edge information alone without any surface information, if the object hides an edge thereof, the hidden edge cannot be determined. Thus, for example, when a viewpoint is moved and the object is viewed from behind, edges corresponding edge information concerning the position-and-orientation estimation model cannot be detected from the captured image, resulting in an error in edge association. Also, in this method, a position-and-orientation estimation model is generated assuming that the 3D edge position does not change. Thus, if an object has a curved surface, since the 3D position of an observed edge of the object varies depending on the viewpoint, it will be difficult to accommodate the object.

In addition, according to the method discussed in Document 2, a CAD model is rendered based on the position and orientation of an object to be observed, and edges based on the orientation are extracted from the rendering results as needed. Thus, according to the method discussed in Document 2, the above problem with an object having a hidden surface and a curved surface can be solved. However, since a CAD model needs to be rendered in real time according to this method, when a CAD model with a large amount of data, such as a design CAD model, is used, the calculation cost is increased. Further, since a design CAD model is basically created as detailed as possible, such CAD model often includes detailed shape information. Thus, detailed short edges are extracted based on such detailed shape information. However, since it is difficult to associate detailed edges with each other according to the position and orientation estimation using edges discussed in Document 2, these detailed edges are often removed as a cause of erroneous association and treated as redundant information.

Also, since the conventional methods discussed in the above Japanese Patent Application Laid-Open No. 2007-207251 and Document 2 are based on rendering results of a CAD model alone, detailed shape information concerning the CAD model, such as normal information and point information, cannot be used for position and orientation estimation or model generation. Depending on a position and orientation estimation method, there are situations in which use of detailed shape information such as normal information and point information may be desirable. To read shape information of a CAD model, the shape description of the CAD model can be analyzed or the rendering engine of the CAD model can be used, for example. However, as described above, analysis of a CAD model is costly.

Also, regarding the use of the rendering engine, the shape information cannot be accessed depending on the engine, and thus, it is difficult to accommodate various model formats. Further, in the first place, there are model formats in which shape information does not include point information or normal information, such as a solid model in which the surface information is described on a parametric basis. Therefore, based on the above conventional methods, depending on the model format, it is often difficult to use detailed model shape information for position and orientation estimation.

SUMMARY OF THE INVENTION

The present invention is directed to generation of a position-and-orientation estimation model including surface information that can accommodate an object having a hidden surface or a curved surface.

The present invention in its first aspect provides a model generation apparatus as specified in claims 1 to 9.

Further features and aspects of the present invention will become apparent from the following detailed description of exemplary embodiments with reference to the attached drawings.

BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 illustrates a structure of a position-and-orientation estimation model generation apparatus according to a first exemplary embodiment.

Fig. 2 is a flow chart illustrating a procedure of a position-and-orientation estimation model generation method according to the first exemplary embodiment.

Fig. 3 illustrates a structure of a position and orientation measurement apparatus using a position-and-orientation estimation model.

Fig. 4 illustrates an example when the position and orientation measurement apparatus is used for MR position adjustment.

Fig. 5 is a flow chart illustrating a procedure of a position and orientation estimation method using a position-and-orientation estimation model.

Fig. 6 is a flow chart illustrating a detailed procedure of a model feature extraction method for position and orientation estimation.

Fig. 7 illustrates a structure of a position-and-orientation estimation model generation apparatus according to a second exemplary embodiment.

Fig. 8 is a flow chart illustrating a procedure of a position-and-orientation estimation model generation method according to the second exemplary embodiment.

DESCRIPTION OF THE EMBODIMENTS

Various exemplary embodiments, features, and aspects of the present invention will now be herein described in detail below with reference to the drawings. It is to be noted that the relative arrangement of the components, the numerical expressions, and numerical values set forth in these embodiments are not intended to limit the scope of the present invention.

In the present exemplary embodiment, a method for generating a position-and-orientation estimation 3D model with rendering results of a 3D model will be described.

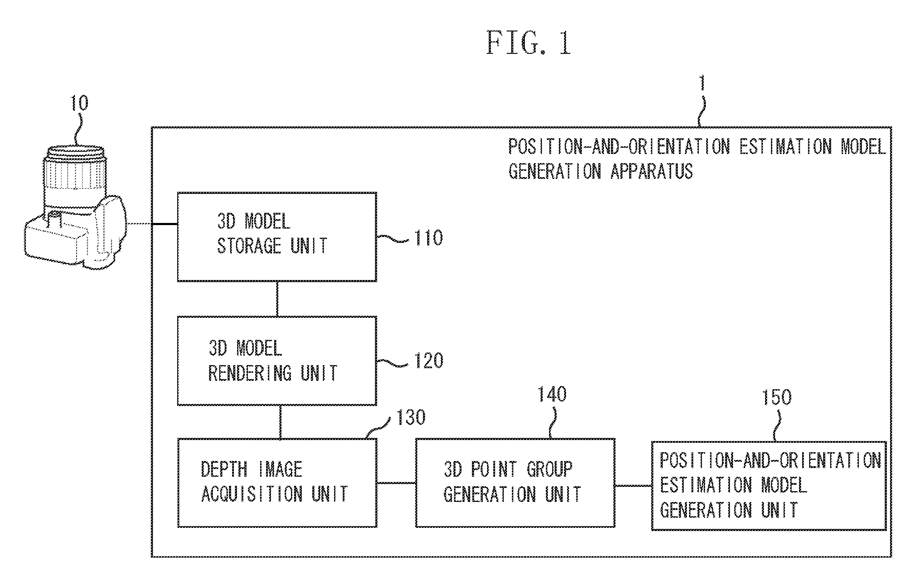

Fig. 1 illustrates a structure of a position-and-orientation estimation model generation apparatus 1 according to a first exemplary embodiment. As shown in Fig. 1, the position-and-orientation estimation model generation apparatus 1 includes a 3D model storage unit 110, a 3D model rendering unit 120, a depth image acquisition unit 130, a 3D point group generation unit 140, and a position-and-orientation estimation model generation unit 150. The 3D model storage unit 110 stores 3D model data 10. The position-and-orientation estimation model generation apparatus 1 outputs a position-and-orientation estimation model based on the 3D model data 10, which is stored in the 3D model storage unit 110 and represents the shape of an object to be observed. In the present exemplary embodiment, it is assumed that the 3D model data 10 stored in the 3D model storage unit 110 corresponds to the shape of an actually captured object to be observed. Further, needless to say, the position-and-orientation estimation model generation apparatus 1 can be realized by a normal information processing apparatus in which a computer or a CPU (central processing unit) executes programs stored in a memory and fulfills certain functions.

Next, each unit of the position-and-orientation estimation model generation apparatus 1 will be described. The 3D model storage unit 110 stores the 3D model data 10 concerning an object to be observed. The 3D model data 10 is a model having 3D geometric information concerning the object. Regarding the format of the 3D model data, a solid model in which surface information is described on a parametric basis or a mesh model formed by apexes and surfaces may be used. Namely, an arbitrary format may be used as long as the 3D model rendering unit 120 can render a model, and thus the format of the 3D model data is not particularly limited. In addition, the 3D model storage unit 110 may include a processing unit converting the format of an arbitrary 3D model. In the present exemplary embodiment, a CAD model including apex information and surface information composed by connecting each apex is used as the 3D model data 10.

The 3D model rendering unit 120 renders the 3D model data 10 stored in the 3D model storage unit 110. The graphics library used by the 3D model rendering unit 120 for rendering may be a widely-used graphics library such as OpenGL and DirectX or a uniquely developed graphics library. Namely, an arbitrary system may be used as long as a model format stored in the 3D model storage unit 110 can be projected on the image plane. In the present exemplary embodiment, OpenGL is used as the graphics library. In addition, Coin3D is used as a rendering engine to read CAD models.

The depth image acquisition unit 130 acquires a depth buffer storing a distance between a viewpoint position set when the 3D model rendering unit 120 renders 3D model data and the 3D model per pixel. The acquired depth buffer is used as a depth image by the 3D point group generation unit 140 to generate a 3D point group.

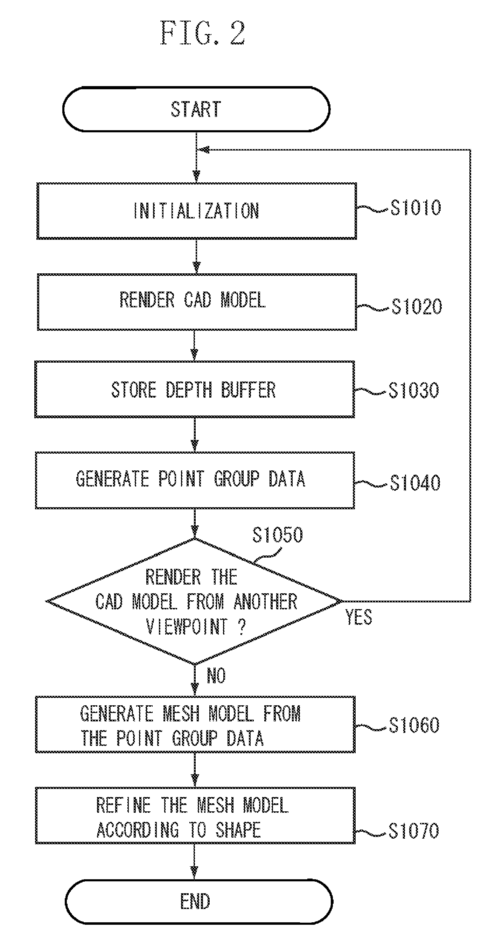

The 3D point group generation unit 140 generates a 3D point group representing the shape of an object to be observed, based on a plurality of depth images acquired by the depth image acquisition unit 130. Values stored in the depth images are normalized between 0 and 1 based on a clipping range set when the 3D model rendering unit 120 renders a CAD model. Thus, first, normalized depth image values are converted to values in the camera coordinate system. The inverse matrix of the model view matrix used for rendering by the 3D model rendering unit 120 is applied to 3D coordinates in the camera coordinate system, and then, the 3D coordinates in the model coordinate system are calculated. Specific procedures of the method for converting a depth image to a 3D point group and the method for connecting the point group will be described based on step S1040 in Fig. 2 later.

The position-and-orientation estimation model generation unit 150 applies triangular patches to the 3D point group generated by the 3D point group generation unit 140 to form surfaces, thereby generating a mesh model. A Delaunay network may be used for the method for generating a mesh model based on the 3D point group. Alternatively, a method discussed in Document 3 (Y. Ohtake, A. Belyaev, H. Seidel, "An integrating approach to meshing scattered point data, "Proceedings of the 2005 ACM symposium on Solid and physical modeling, p. 61-69, June 13-15, 2005) may be used. An arbitrary method may be used as long as a mesh model can be generated from a 3D point group. Namely, the model generation method is not particularly limited. In the present exemplary embodiment, the method discussed in Document 3 is used to generate a mesh model from 3D point group data. Further, the position-and-orientation estimation model generation unit 150 refines the generated mesh based on a position-and-orientation estimation method used. Specific procedures for generating a 3D model from 3D point group data will be described with step S1060 in Fig. 2 later.

Next, the procedure of the method for generating a position-and-orientation estimation 3D model according to the first exemplary embodiment will be described. Fig. 2 is a flow chart illustrating the procedure of the method for generating a position-and-orientation estimation 3D model according to the first exemplary embodiment.

First, in step S1010, the 3D model rendering unit 120 executes initialization. In the initialization, the viewpoint position and orientation with respect to a CAD model when the 3D model rendering unit 120 renders the 3D model are determined. Since the 3D point group generation unit 140 generates the 3D point group data based on data within an image range of a depth image, it is necessary to set the rendering position and orientation so that the CAD model is included in the rendering range. The user may set the rendering position and orientation with respect to the CAD model per rendering. Alternatively, a plurality of predetermined viewpoint positions may be set in advance and a suitable viewpoint position may be selected. Further, the user may set in advance part of a CAD model as a position-and-orientation estimation model and move the viewpoint position so that the desired part is rendered. Furthermore, the position and orientation may be determined by setting only the distance from a CAD model and changing the latitude and longitude at certain intervals with the CAD model at the center, so that CAD model can be viewed from all directions.

The method for setting the rendering position and orientation is not limited to the above method. As long as the part used as a position and orientation estimation model is included in a rendering range, the number of viewpoints is not limited. Further, the viewpoint may be set at an arbitrary position and orientation. When part used for the position and orientation estimation can be determined, the part alone may be rendered. In this way, by adjusting the position-and-orientation estimation model finally generated, calculation cost can be reduced. In the present exemplary embodiment, only the distance from a CAD model is specified, and the viewpoint position and orientation are set so that the viewpoint is moved around the CAD model at certain intervals with the CAD model at the center. Upon completion of setting of the viewpoint position and orientation for rendering, the operation proceeds to step S1020.

Next, in step S1020, the 3D model rendering unit 120 renders the CAD model stored in the 3D model storage unit 110, based on the viewpoint position and orientation set in step S1010. Rendering a model means projecting a CAD model of an object to be observed which is stored in the 3D model storage unit 110 on an image plane based on the viewpoint position and orientation set in step S1010. To render a model, in addition to the setting of the position and orientation, it is necessary to set internal parameters (such as a focal length and a principal point position) of a projection matrix. Since the position-and-orientation estimation model generation apparatus 1 of the present exemplary embodiment uses the results of rendered images alone to generate a position-and-orientation estimation model, basically, arbitrary values may be used to set the internal parameters. In the present exemplary embodiment, by previously measuring internal parameters of an image pickup device finally used for position and orientation estimation, the intrinsic matrix used for rendering is set. Further, by setting maximum and minimum values of the distance between a viewpoint and a model and omitting rendering of the model out of the range, calculation cost for rendering processing is reduced. This processing is referred to as clipping and is commonly employed.

When the model is rendered, a color buffer storing 2D coordinates on an image plane and luminance values corresponding to the 2D coordinates and a depth buffer storing depth values between the image plane and the 3D model are calculated. The color buffer stores luminance values which are based on the light source setting and the surface attributes of the CAD model. In the case of a CAD model created for design purposes, identification information specific to each material or part is often stored as the surface attributes of a CAD model. Thus, setting is not often made based on the surface attributes of an actual object to be observed.

Also, since the light source setting is not made when a model is rendered in the present exemplary embodiment, the surface attributes set in the CAD model are rendered as it is, and thus the correlation between an object to be observed on the color buffer and an actual object to be observed is low. In contrast, the values stored in the depth buffer are values determined by the shape of a CAD model. As long as the CAD model is based on the shape of an object to be observed, data based on the shape of the object to be observed is stored as the contents of the depth buffer. Upon completion of the rendering of the CAD model, the operation proceeds to step S1030.

In step S1030, the depth image acquisition unit 130 reads the depth buffer obtained as a result of rendering the CAD model in step S1020 and stores the depth buffer in a main memory. Generally, the depth buffer is stored in a memory (video memory) on a graphic card and cannot be referred to from a CPU that functions as the depth image acquisition unit 130 and the 3D point group generation unit 140. Thus, data in a video memory is transferred to a main memory. Since generally this processing is not often executed at high speed, if the entire contents of a depth buffer are transferred, calculation cost is increased. However, when a model region on the depth buffer can be specified, since the region alone is transferred, the processing can be executed at high speed. This operation can easily be realized by calculating an encompassing rectangle in a region in which the depth values of an object to be observed are stored in the depth buffer. In the present exemplary embodiment, all regions obtained as the depth buffer are acquired. Upon completion of the acquisition of the depth buffer, the operation proceeds to step S1040.

In step S1040, the 3D point group generation unit 140 obtains a 3D coordinate in the model coordinate system for each of the pixels of the depth buffer acquired in step S1030 to obtain a 3D point group in the model coordinate system.

First, the depth values stored in the depth buffer are converted to values in the camera coordinate system. The values stored in the depth buffer are normalized between 0 and 1 based on the clipping range set in the clipping processing in step S1020. Thus, 3D coordinates in the reference coordinate system cannot be obtained directly from the depth values of the depth buffer. For this reason, minimum and maximum values in the clipping range are used to convert the values of the depth buffer into values of the distance between the viewpoint and the model in the camera coordinate system. Next, by using internal parameters of the projection matrix, 3D coordinates in the camera coordinate system are obtained based on the 2D coordinates on the image plane of the depth buffer and the depth values in the camera coordinate system.

Next, the 3D coordinates in the camera coordinate system are subjected to inverse transformation of the position and orientation transformation used when the CAD model is rendered in step S1020 to obtain 3D coordinates in the reference coordinate system. By executing the above processing on each coordinate of the depth buffer, the 3D point group generation unit 140 generates 3D point group data in the reference coordinate system from the depth buffer. Further, by sequentially adding such 3D point group data generated from the depth buffer from each viewpoint to the reference coordinate system, detailed 3D point group data representing the shape of an object to be observed can be obtained.

Next, in step S1050, whether the model should be rendered from another viewpoint is determined. When 3D point group data needs to be generated from another viewpoint, the operation returns to step S1010, and 3D point group data from another viewpoint is generated according to the above operation. Thus, the operation from step S1010 to step S1040 is repeated until point group data in a desired range is generated. In step S1050, when it is determined that 3D point group data from another viewpoint does not need to be generated, a mesh model is generated from the point group data in step S1040.

Next, in step S1060, the position-and-orientation estimation model generation unit 150 generates a mesh model for position and orientation estimation from the 3D point group data generated in step S1040. For example, by using the 3D point group data to calculate Delaunay networks in which a group of points are used as apexes, the position-and-orientation estimation model generation unit 150 generates a mesh model formed of triangular patches. A method discussed in Document 3 can be used to generate a mesh with Delaunay networks in the present exemplary embodiment. Since specific procedures of the method are widely discussed in Document 3, the details of the method are not described herein. In addition to triangular patches, polygon patches including quadrangular patches may be used to form a surface model.

Next, in step S1070, the position-and-orientation estimation model generation unit 150 refines the mesh. Since the mesh model generated in step S1060 is formed of fine triangular patches composed of all the point group data, the data amount may be large. Also, it is often the case that a surface that should be modeled as a single surface is formed as an unnecessarily detailed patch. Thus, the position-and-orientation estimation model generation unit 150 refines a mesh model, based on the shape of the model and features used for position and orientation estimation. The refining of a mesh model refers to an operation of connecting patches of the mesh model, which is executed by reducing the number of redundant patches as shape information or omitting detailed shapes to reduce the data amount.

Aside from the method discussed in Document 3, other methods may be employed to refine a mesh model. For example, in one applicable method, all the triangular patches forming the mesh model are examined, normal lines of patches adjacent to each other are calculated, and the patches determined to have the same normal direction are connected. In another applicable method, the distance between the surface of a patch and the apex of an adjacent patch is calculated, and if it is determined that the patches can be on the same surface, the patches are connected.

The method for refining a mesh model is not limited to the above methods. An arbitrary method may be used as long as the level of detail of the shape of a mesh model can be adjusted based on a certain threshold value. Selection of the method does not degrade the essence of the present invention. In the present exemplary embodiment, the method discussed in Document 3 is used to refine a mesh model. Since specific procedures are discussed in Document 3, the details of the method are not described herein.

The shape of the model finally generated as a position-and-orientation estimation model varies depending on how much detailed information is omitted when refining a mesh model. Thus, to generate a position-and-orientation estimation model suitable for a position and orientation estimation method, it is necessary to refine a mesh model based on an appropriate level of detail. The level of detail is a value that determines how detailed the shape of a mesh model should be when the mesh model is refined. When the level of detail is set low, while the detailed shape of the mesh model is omitted, the data amount is greatly reduced. When the level of detail is set high, while reduction in the amount of data is small, the mesh model is refined with the detailed shape thereof maintained.

The level of detail varies depending on how detailed the shape of the model needs to be as a position-and-orientation estimation model finally formed. Thus, the level of detail needs to be appropriately set depending on the features used for position and orientation estimation or complexity or data amount of an original model. For example, when using the position and orientation estimation method using edges discussed in Document 1, it is difficult to accurately associate short edges observed on the image plane between frames. Thus, when edges extracted from a position-and-orientation estimation model include many short edges, accuracy in position and orientation estimation may be decreased. Thus, when the position and orientation estimation using edges is executed, unnecessary detailed shapes need to be eliminated from the position-and-orientation estimation model.

In this way, association can be made more stably. Therefore, by extracting edges from the depth buffer used to generate 3D point group data and determining regions in which short edges are finely and closely located together, the level of detail is determined for the model to be refined, so that the shapes of the regions are omitted. Namely, when extracting edges from the depth image(depth buffer), the position-and-orientation estimation model generation unit 150 omits information concerning shapes extracted as edges less than a predetermined length and then generates a position-and-orientation estimation model. In this way, based on a position and orientation estimation finally used, a position-and-orientation estimation model with an appropriate level of detail can be generated.

The level of detail may be set depending on the shape of a model. For example, when the operator knows in advance that the shape of a model is simple, by setting the level of detail to be low, the data amount of the position-and-orientation estimation model can be significantly reduced. Further, the method for setting the level of detail is not merely limited to the above method. For example, the level of detail may be set empirically depending on the shape or the scale of a model. Alternatively, the level of detail may be set so that the number of apexes of the mesh model becomes equal to or greater than a predetermined number. When the number of apexes of the position-and-orientation estimation model (mesh model, for example) generated from 3D point group data is greater than a predetermined number, so-called polygon reduction may be executed to reduce the data amount. An arbitrary method may be used as long as a model convenient for position and orientation estimation is finally generated. Namely, the method for determining the level of detail is not particularly limited.

The method for refining a mesh model based on features used for position and orientation estimation is not limited to the above method that involves change of the level of detail. For example, part having short and closely located edges may be eliminated from a refined position-and-orientation estimation model. An arbitrary method may be used, as long as a model is refined based on the features used for a position and orientation estimation method, so that convenient features appear and inconvenient features are eliminated. Namely, the method for refining a model is not particularly limited. In the present exemplary embodiment, a specific threshold value is determined based on the shape of a model. A mesh model is thus generated from point group data, and the position-and-orientation estimation model generation apparatus 1 ends its processing.

As described above, according to the present exemplary embodiment, a CAD model is rendered from a plurality of viewpoints, a depth buffer is obtained as a result of rendering, 3D point group data is generated from the depth buffer, a mesh model with Delaunay networks is generated, and the mesh model is finally refined based on the position and orientation estimation used. In this way, a position-and-orientation estimation model based on a position and orientation estimation method can be generated from a CAD model.

According to the above processing, a position and orientation estimation model is thus generated. Next, with the use of this model, the position and orientation of an image pickup device with respect to an object to be observed are estimated. The method for position and orientation estimation using a position-and-orientation estimation model generated by the position-and-orientation estimation model generation apparatus according to the present exemplary embodiment will be hereinafter described. The position and orientation estimation method uses edges.

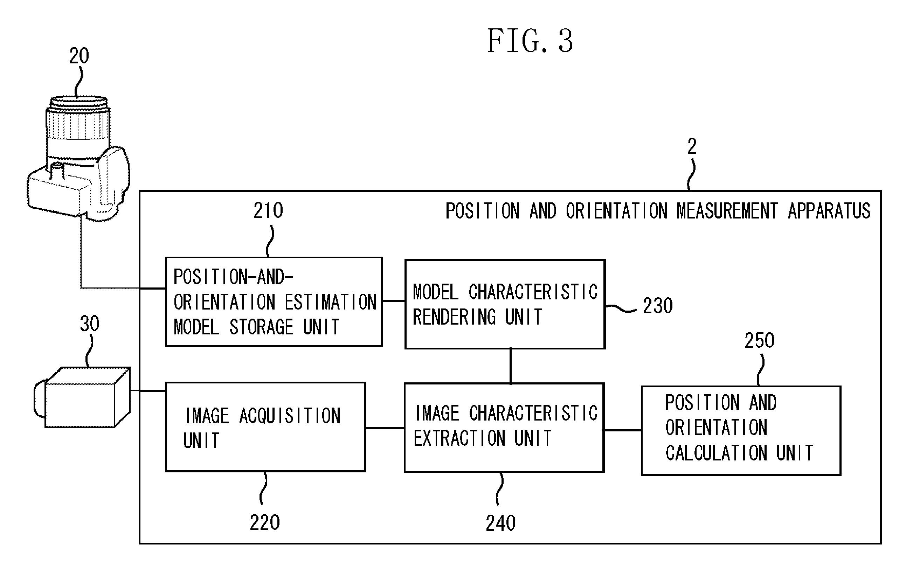

Fig. 3 illustrates a structure of a position and orientation measurement apparatus 2 executing position and orientation estimation using a position-and-orientation estimation model 20 generated by the position-and-orientation estimation model generation apparatus 1 according to the present exemplary embodiment. The position and orientation measurement apparatus 2 includes a position-and-orientation estimation model storage unit 210, an image acquisition unit 220, a model feature extraction unit 230, an image feature extraction unit 240, and a position and orientation calculation unit 250. The position-and-orientation estimation model 20 is stored in the position-and-orientation estimation model storage unit 210, and an image pickup device 30 is connected to the image acquisition unit 220. Needless to say, the position and orientation measurement apparatus 2 can be realized by a normal information processing apparatus in which a computer or a CPU executes programs stored in a memory and fulfills certain functions. Further, the position and orientation measurement apparatus 2 and the position-and-orientation estimation model generation apparatus 1 may be realized by a single information processing apparatus.

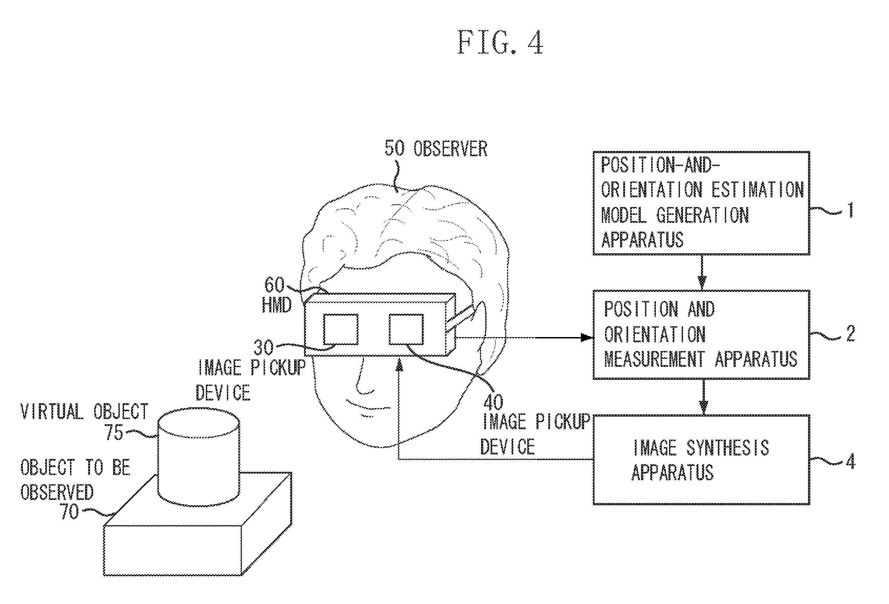

Fig. 4 illustrates an example when the position and orientation measurement apparatus 2 is used for MR position adjustment. An observer 50 wears a video see-through HMD 60. The video see-through HMD 60 includes image pickup devices 30 and 40 for the right and left eyes, respectively. The image pickup devices 30 and 40 capture an image of an object to be observed 70. The image captured by the image pickup device 30 is input to the position and orientation measurement apparatus 2. The position and orientation measurement apparatus 2 stores a position-and-orientation estimation model generated by the position-and-orientation estimation model generation apparatus 1 in the position-and-orientation estimation model storage unit 210. Next, the position and orientation measurement apparatus 2 calculates the position and orientation of the image pickup device 30, based on the image captured by the image pickup device 30 and a position-and-orientation estimation 3D model which is stored in the position-and-orientation estimation model storage unit 210 and which corresponds to the object to be observed 70.

An image synthesis apparatus 4 includes a virtual space image generation unit (not shown) generating a virtual space image of a virtual object 75. The image synthesis apparatus 4 superimposes the virtual space image of the virtual object 75 on a real space image captured by the image pickup device 30 and synthesizes the images, based on the position and orientation of the image pickup device 30 calculated by the position and orientation measurement apparatus 2, thereby generating an MR image. The HMD 60 displays the MR image generated by the image synthesis apparatus 4 on a display device. The position and orientation measurement apparatus 2 or the image synthesis apparatus 4 may be incorporated in the HMD 60.

In addition to an image captured by the image pickup device 30, an image captured by the image pickup device 40 may be used to calculate the position and orientation. In that case, by calculating a relative position and orientation relationship between the image pickup devices 30 and 40 in advance, a relative position and orientation between an object, the image pickup device 30, and the image pickup device 40 can be calculated. Even when the image pickup device 30 is hidden by some object and a relative position and orientation between the object and the image pickup device 30 cannot be calculated directly, with the use of an image captured by the image pickup device 40 and based on a relative position and orientation between the object and the image pickup device 40 and a relative position and orientation between the image pickup devices 40 and 30, the relative position and orientation between the object and the image pickup device 30 can be calculated. In the present exemplary embodiment, only an image captured by the image pickup device 30 is used.

Next, each unit of the position and orientation measurement apparatus 2 will be described. The position-and-orientation estimation model storage unit 210 stores the position-and-orientation estimation model 20 that is used as a reference for position and orientation calculation and generated by the position-and-orientation estimation model generation apparatus 1.

The image acquisition unit 220 inputs an image captured by the image pickup device 30 to the position and orientation measurement apparatus 2. When the image pickup device outputs an analog output defined by the National Television System Committee (NTSC) or the like, the image acquisition unit 220 can be realized by an analog video capture board. When the image pickup device outputs a digital output defined by the Institute of Electrical and Electronics Engineers (IEEE) 1394 or the like, the image acquisition unit 220 can be realized by an IEEE1394 interface board or the like. Further, the image acquisition unit 220 may acquire an image by reading still- or moving-image digital data stored in advance in a storage device.

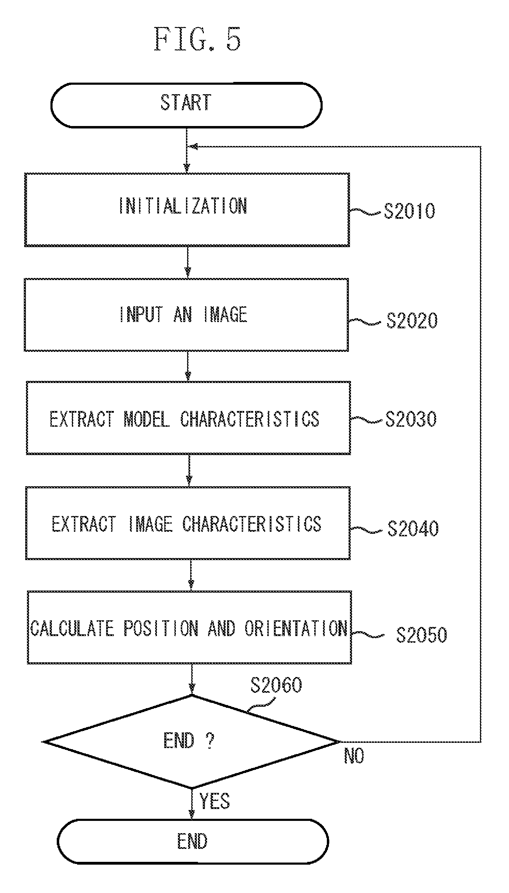

The model feature extraction unit 230 extracts features of the position-and-orientation estimation model 20 to be applied to a captured image. In the present exemplary embodiment, the model feature extraction unit 230 extracts edge information from an image rendered based on the position-and-orientation estimation model and a general position and orientation. The method for extracting feature from a model (edge information extraction method) will be described with step S2030 in Fig. 5 below. Point features or the like may be detected from the luminance distribution in an image and used instead of edges.

On the image input by the image acquisition unit 220, the image feature extraction unit 240 detects image features used to calculate the position and orientation of the image pickup device 30. In the present exemplary embodiment, the image feature extraction unit 240 detects edges on the image. The method for detecting edges will be described with step S2040 in Fig. 5 below.

The position and orientation calculation unit 250 associates features extracted by the model feature extraction unit 230 and the image feature extraction unit 240. Based on the results of the association, the position and orientation calculation unit 250 calculates the position and orientation of the image pickup device 30 in the coordinate system with the position-and-orientation estimation model 20 as a reference.

The position and orientation estimation method using the position-and-orientation estimation model 20 generated by the position-and-orientation estimation model generation apparatus 1 is not limited to the method used with the position and orientation measurement apparatus 2 according to the present exemplary embodiment. An arbitrary position and orientation estimation method may be used as long as a 3D model and a captured image are associated with each other. For example, the position and orientation estimation method discussed in Document 2 may be used.

Next, a procedure of the position and orientation estimation method according to the present exemplary embodiment will be described. Fig. 5 is a flow chart illustrating a procedure of a position and orientation estimation method according to the present exemplary embodiment.

First, in step S2010, initialization is executed. A relative general position and orientation between the image pickup device 30 and an object to be observed in the reference coordinate system is set. In the position and orientation measurement method according to the present exemplary embodiment, a general position and orientation of the image pickup device is updated as needed by using edge information concerning an object to be observed which is captured on an image to be captured. Thus, prior to position and orientation measurement, it is necessary to set a general position and orientation of the image pickup device as an initial position and an initial orientation. Thus, for example, by setting a certain position and orientation in advance and moving the image pickup device to the position and orientation, the initialization is executed.

Alternatively, an artificial marker that can be recognized when detected in an image may be arranged, and a general position and orientation of the image pickup device may be obtained through the association between the image coordinate of each apex of the indicator and the 3D position in the reference coordinate system. Alternatively, the position and orientation of the image pickup device may be determined by detecting a highly distinguishable natural feature point in advance, obtaining the 3D position of the feature point, detecting the feature point on an image upon initialization, and obtaining association between the image coordinate and the 3D position. Further, the position and orientation of the image pickup device may be measured with a 6-degree-of-freedom position and orientation sensor of a magnetic, an optical, or an ultrasonic type, and the measured position and orientation may be used as a general position and orientation. The initialization may also be executed by using the position and orientation of the image pickup device measured with a combination of image information such as information obtained with an artificial indicator or a natural feature, the above 6-degree-of-freedom position and orientation sensor, a 3 degree-of-freedom orientation sensor, and a 3 degree-of-freedom position sensor.

In step S2020, the image acquisition unit 220 acquires the image captured by the image pickup device 30 and incorporates the image into the position and orientation measurement apparatus 2.

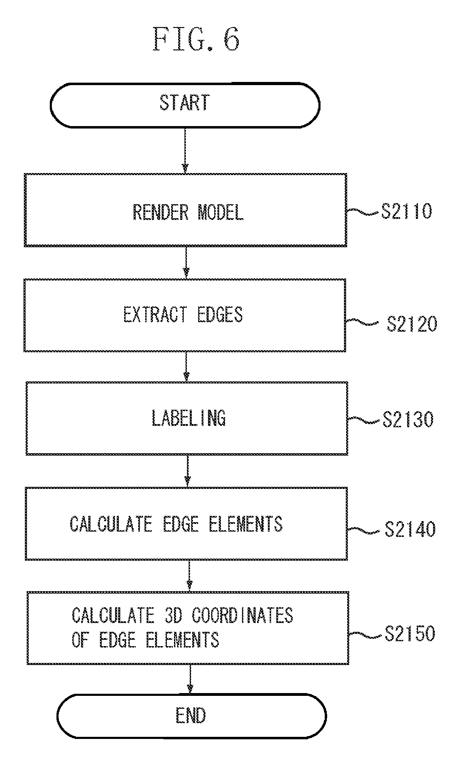

Next, in step S2030, the model feature extraction unit 230 extracts edge information to be associated with the captured image from the position-and-orientation estimation model. Fig. 6 is a flow chart illustrating a detailed procedure of the method for extracting edge features of an object to be observed according to the present exemplary embodiment.

First, in step S2110, based on the general position and orientation of the object to be observed which is determined in step S2010, the model feature extraction unit 230 renders the position-and-orientation estimation model stored in the position-and-orientation estimation model storage unit 210. In the present exemplary embodiment, regarding internal parameters of the projection matrix used for rendering, internal parameters of the image pickup device 30 are measured in advance, and the internal parameters are matched with an actually used camera. Since the operation of the model feature extraction unit 230 for rendering a model is basically similar to that described in step S1020, the description thereof is omitted herein.

Next, in step S2120, the model feature extraction unit 230 conducts edge detection on the depth buffer generated in the process of rendering in step S2110. By conducting edge detection on the depth buffer, regions in which depths change discontinuously can be determined. To detect edges, an edge detection filter such as a sobel filter may be used, for example. Alternatively, the Canny algorithm may be used. An arbitrary method may be used as long as regions in which image pixel values change discontinuously can be detected. The edge detection method is not particularly limited. In the present exemplary embodiment, the Canny algorithm is used to detect edges. Thus, by conducting edge detection on the depth buffer based on the Canny algorithm, and a binarized image having an edge region and a non-edge region can be obtained.

Next, in step S2130, the model feature extraction unit 230 carries out labeling on adjacent edges in the binarized image generated in step S2120 to extract edge-connected components. This labeling assigns edges present within an 8-pixel radius of a certain pixel with an identical label.

Next, in step S2140, the model feature extraction unit 230 extracts edge elements from the edge-connected components extracted in step S2130. An edge element is an edge with a very short distance between edges points (start point and end point) on an image. The edge elements are extracted by calculating division points that divide edges labeled in the same label at regular intervals on the image and determining very short connected components around the division points. In the present exemplary embodiment, connected components that are 3 pixels away from a division point are set as the edge points to extract edge elements with the division point at the center. The number of the edge elements extracted from the depth buffer is denoted by N, and each of the edge elements is denoted by EFi (i = 1 to N). The greater the number N of edge elements is, the longer the processing time becomes. The distance between edge elements may be changed as needed on the image so that the number of edge elements becomes constant.

Next, in step S1250, for the edge elements calculated in step S1240, 3D coordinates in the reference coordinate system are determined, using the depth buffer generated in step S2110. Since the procedure for converting depth values in the depth buffer into 3D coordinates in the reference coordinate system is basically similar to that in step S1040, the description of the procedure is omitted herein. After the 3D coordinate of each edge element EFi is calculated, the operation proceeds to step S2040.

In step S2040, the image feature extraction unit 240 detects edges corresponding to the edge elements EFi (i = 1 to N) extracted from the position-and-orientation estimation model determined in step S2030 from a current frame image captured by the image pickup device 30. The edge detection is carried out on a detection line (line in the normal direction of an edge element) of each edge element EFi, by calculating an extreme value of the density gradient on the captured image. An edge is present where a value of the density gradient is extreme on the detection line. In the present exemplary embodiment, when a plurality of edges are present on a detection line, an edge closest to the center point of an edge element is determined to be a correspondence point, and the image coordinate of the correspondence point and the 3D coordinate of the edge element EFi are stored.

In the present exemplary embodiment, while an edge closest to the edge element EFi is determined to be a correspondence point, the present invention is not limited to such example. An edge with the greatest absolute value of an extreme value of the density gradient may also be determined to be a correspondence point. Further, instead of a single point, a plurality of points may be stored as candidate correspondence points. The above processing is repeated on all the edge elements EFi, and upon completion of the processing on all the edge elements EFi, the operation proceeds from step S2040 to step S2050.

In step S2050, using the nonlinear optimization calculation, the position and orientation calculation unit 250 corrects the relative general position and orientation between the image pickup device and the object to be observed through iterative operation, to calculate the position and orientation of the image pickup device. Among the edge elements EFi of the object feature model extracted in step S2030, the number of edge elements for which correspondence points are determined in step S2040 is denoted by Lc. The horizontal direction and the vertical direction of the image are denoted by the x-axis and the y-axis, respectively. Further, the image coordinate projected at the center point of an edge element is denoted by $(u0, v0)$, and the slope of the line of the edge element with respect to the x-axis on the image is denoted by $\theta$. The calculated slope $\theta$ is the slope of a line formed by connecting the two-dimensional (2D) coordinates of edge-element end points (start point and end point) on the captured image. The normal vector of the edge-element line on the image is denoted by $(\sin\theta, -\cos\theta)$. The image coordinate of the correspondence point of the edge element is denoted by $(u', v')$.

The equation of a straight line passing through the point $(u, v)$ with the slope $\theta$ is represented by the following formula:

$$x \sin\theta - y \cos\theta = u \sin\theta - v \cos\theta \quad \cdots (1)$$

The image coordinates of edge elements on a captured image change depending on the position and orientation of the image pickup device.

The degree-of-freedom of the position and orientation of the image pickup device is 6-degree-of-freedom. The parameter representing the position and orientation of the image pickup device is denoted by s. The parameter s is a 6-dimensional vector composed of three elements representing the position of the image pickup device and three elements representing the orientation of the image pickup device. The three elements representing the orientation can be represented by an expression based on the Euler angle or a 3-dimensional vector in which the direction represents a rotational axis and the magnitude represents a rotational angle. The image coordinate (u, v) at the center of an edge element is located near $(u_0, v_0)$ and can be approximated by the first-order Taylor expansion as follows:

$$u \approx u_0 + \sum_{i=1}^{6} \frac{\partial u}{\partial s_i} \Delta s_i \quad , \quad v \approx v_0 + \sum_{i=1}^{6} \frac{\partial v}{\partial s_i} \Delta s_i$$

$$\cdot (2)$$

Regarding the formula (2), the method for deriving the partial differentiation for u and v is widely known as discussed in Document 4 (K. Satoh, S. Uchiyama, H. Yamamoto, and H. Tamura, "Robust vision-based registration utilizing bird's-eye view with user's view," Proc. The 2nd IEEE/ACM International Symposium on Mixed and Augmented Reality (ISMAR03), pp. 46-55, 2003), for example. Thus, details of the method are not described herein. By substituting the formula (2) into the formula (1), the formula (3) is obtained.

$$x \sin\theta - y \cos\theta = \left( u_0 + \sum_{i=1}^{6} \frac{\partial u}{\partial s_i} \Delta s_i \right) \sin\theta - \left( v_0 + \sum_{i=1}^{6} \frac{\partial v}{\partial s_i} \Delta s_i \right) \cos\theta$$

$$\cdots$$

(3)

Now, a correction value $\Delta s$ of the parameter s representing the position and orientation of the image pickup device is calculated so that the straight line represented by the formula (3) passes through the image coordinate (u', v') of the correspondence point of the edge element. Assuming that $r_0 = u_0 \sin\theta - v_0 \cos\theta$ (constant) and $d = u' \sin\theta - v' \sin\theta$ (constant), the following formula is obtained:

$$\sin\theta \sum_{i=1}^{6} \frac{\partial u}{\partial s_i} \Delta s_i - \cos\theta \sum_{i=1}^{6} \frac{\partial v}{\partial s_i} \Delta s_i = d - r_0$$

$$\cdots$$

(4)

Since the formula (4) holds true for Lc edge elements, as the formula (5) shows, a linear simultaneous equation with respect to the correction value $\Delta s$ is established.

$$\begin{bmatrix} \sin\theta_1 \frac{\partial u_1}{\partial s_1} - \cos\theta_1 \frac{\partial v_1}{\partial s_1} & \sin\theta_1 \frac{\partial u_1}{\partial s_2} - \cos\theta_1 \frac{\partial v_1}{\partial s_2} & \cdots & \sin\theta_1 \frac{\partial u_1}{\partial s_6} - \cos\theta_1 \frac{\partial v_1}{\partial s_6} \\ \sin\theta_2 \frac{\partial u_2}{\partial s_1} - \cos\theta_1 \frac{\partial v_2}{\partial s_1} & \sin\theta_2 \frac{\partial u_2}{\partial s_2} - \cos\theta_1 \frac{\partial v_2}{\partial s_2} & \cdots & \sin\theta_2 \frac{\partial u_2}{\partial s_6} - \cos\theta_1 \frac{\partial v_2}{\partial s_6} \\ \vdots & \vdots & \ddots & \vdots \\ \sin\theta_{L_e} \frac{\partial u_{L_e}}{\partial s_1} - \cos\theta_{L_e} \frac{\partial v_{L_e}}{\partial s_1} & \sin\theta_{L_e} \frac{\partial u_{L_e}}{\partial s_2} - \cos\theta_{L_e} \frac{\partial v_{L_e}}{\partial s_2} & \cdots & \sin\theta_{L_e} \frac{\partial u_{L_e}}{\partial s_6} - \cos\theta_{L_e} \frac{\partial v_{L_e}}{\partial s_6} \end{bmatrix} \begin{bmatrix} \Delta s_1 \\ \Delta s_2 \\ \Delta s_3 \\ \Delta s_4 \\ \Delta s_5 \\ \Delta s_6 \end{bmatrix} = \begin{bmatrix} d_1 - r_1 \\ d_2 - r_2 \\ \vdots \\ d_{L_e} - r_{L_e} \end{bmatrix}$$

$$\cdots (5)$$

The formula (5) is simplified, and thus the formula (6) is obtained.

$$\mathbf{J} \Delta \mathbf{s} = \mathbf{E} \quad \cdots (6)$$

Based on the formula (6), using the Gauss-Newton method or the like and the generalized inverse matrix $(J^T \cdot J)^{-1}$ of the matrix J, the correction value $\Delta s$ is obtained. However, since the edge detection often involves an error detection, a robust estimation method as described below is used. Generally, in the case of edge elements corresponding to erroneously detected edges, an error d-r is significant. Thus, since the impact on the simultaneous equations (5) and (6) is large, the accuracy of the correction value $\Delta s$ accordingly obtained decreases. Thus, a small weight is given to edge element data having a large error d-r, and a large weight is given to edge element data having a small error d-r. For example, the weight is given by a Turkey function as shown in the formula (7A).

$$w(d-r) = \begin{cases} \left(1 - \left((d-r)/c\right)^2\right)^2 & |d-r| \le c \\ 0 & |d-r| > c \end{cases}$$

$$\cdot (7A)$$

The formula (7A) includes a constant c. Instead of the Turkey function, other functions may be used for giving weight. An arbitrary function may be used as long as a small weight can be given to edge elements having a large error d-r and a large weight can be given to edge elements having a small error d-r. For example, a Huber function may be used, as shown in the following formula (7B).

$$w(d-r) = \begin{cases} 1 & |d-r| \le k \\ k/|d-r| & |d-r| > k \end{cases}$$

$$\cdots (7B)$$

Assuming that the weight corresponding to the edge element EFi is $w_i$, a weight matrix W is defined as shown in the formula (8).

$$\mathbf{W} = \begin{bmatrix} w_1 & & & & \mathbf{0} \\ & w_2 & & & \\ & & \ddots & & \\ \mathbf{0} & & & & w_{L_c} \end{bmatrix} \cdots (8)$$

The weight matrix W is a square matrix of Lc×Lc in which all the components other than the diagonal components are 0. The diagonal component is denoted by the weight $w_i$. The formula (6) is transformed into the formula (9) with this weight matrix W.

$$\mathbf{WJ}\triangle\mathbf{s} = \mathbf{WE} \cdots (9)$$

By transforming the formula (9) into the formula (10), the correction value ∆s can be obtained.

$$\triangle\mathbf{s} = (\mathbf{J}^T\mathbf{WJ})^{-1}\mathbf{J}^T\mathbf{WE} \cdots (10)$$

Using the thus obtained ∆s, the position and orientation of the image pickup device are updated. Next, whether the iterative operation for the position and orientation of the image pickup device has been converged is determined. When the correction value ∆s is sufficiently small, the sum of the errors r-d is sufficiently small, or the sum of the errors r-d does not change, it is determined that the calculation for the position and orientation of the image pickup device has been converged. When convergence is not determined, an updated position and orientation of the image pickup device is used to calculate the slope θ of the line, $r_0$, d, and the partial differentiation of u and v, again. The correction value ∆s is then determined again based on the formula (10). In the present exemplary embodiment, the Gauss-Newton method is used as a nonlinear optimization method. However, the nonlinear optimization method is not limited to the above example. Other nonlinear optimization methods may be used, such as the Newton-Raphson method, the Levenberg-Marquardt method, the steepest descent method, or the conjugate gradient method. Thus, the method for calculating the position and orientation of the image pickup device in step S2050 has been described.

In step S2060, it is determined whether an input indicating the end of the position and orientation calculation has been made. If such input has been made (No in step S2060), the operation of the flow chart ends. If not (Yes in step S2060), the operation goes back to step S2020 to acquire a new image and calculate the position and orientation again.

As described above, in the first exemplary embodiment, features extracted as needed from a position-and-orientation estimation model generated by the position-and-orientation estimation model generation apparatus 1 and features extracted from a captured image are associated to calculate a relative position and orientation between an object to be observed and an image pickup device.

In the first exemplary embodiment, the position-and-orientation estimation model generation apparatus 1 includes a rendering engine for rendering a CAD model and renders a CAD model inside the apparatus. In a second exemplary embodiment, an external application capable of rendering a CAD model is used to acquire a depth buffer of the CAD model. In this way, a position-and-orientation estimation model based on the CAD model is generated.

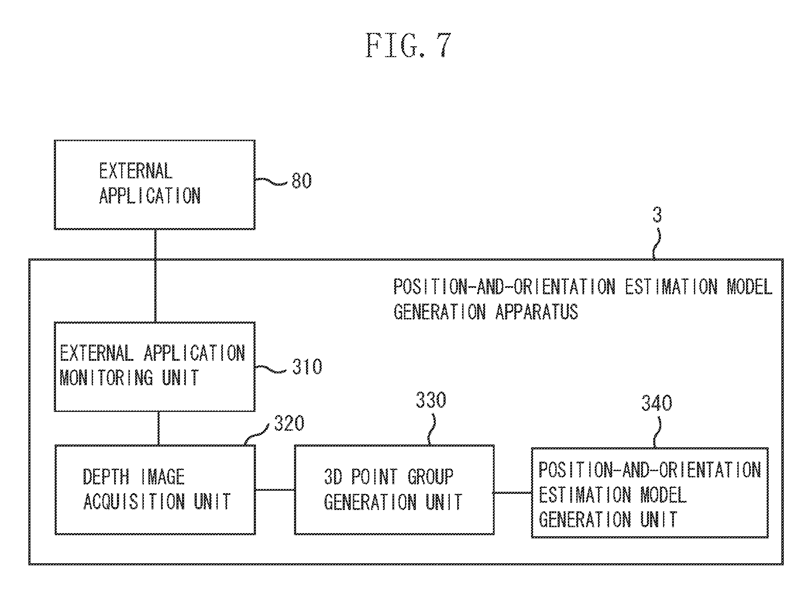

Fig. 7 illustrates a structure of a position-and-orientation estimation model generation apparatus 3 according to the second exemplary embodiment. As shown in Fig. 7, the position-and-orientation estimation model generation apparatus 3 includes an external application monitoring unit 310, a depth image acquisition unit 320, a 3D point group generation unit 330, and a position-and-orientation estimation model generation unit 340. The external application monitoring unit 310 is connected to an external application 80 having a model rendering function (an ability of rendering a CAD model in the present exemplary embodiment). The external application monitoring unit 310 transfers a depth buffer to a main memory based on a rendering command issued to the external application 80.

While the external application monitoring unit 310 is connected to the external application 80 as described above, "connecting" means accessing data stored in a memory from another path and rewriting the data. The depth image acquisition unit 320 acquires the stored depth buffer based on the rendering command issued to the external application 80 and stores the depth buffer in the position-and-orientation estimation model generation apparatus 3. The position-and-orientation estimation model generation apparatus 3 uses the acquired depth buffer and generates a position-and-orientation estimation model based on a position and orientation estimation method. The position-and-orientation estimation model generation apparatus 3 of the present exemplary embodiment is applicable when the 3D model rendered with the external application 80 corresponds to the shape of an object to be observed for which the position and orientation estimation is carried out. Each unit of the position-and-orientation estimation model generation apparatus 3 will be hereinafter described.

First, the external application monitoring unit 310 monitors a rendering command issued to the external application 80. When a model is rendered, the external application monitoring unit 310 acquires a depth buffer stored in the external application 80. The external application monitoring unit 310 can acquire a depth buffer with an arbitrary method. For example, execution of a graphics library rendering command may be monitored to acquire a depth buffer stored in a video memory when the rendering command is executed. Alternatively, a graphics library rendering command may be rewritten so that the depth buffer generated by rendering is transferred to a main memory each time a rendering command is executed.

Namely, an arbitrary method may be used as long as the depth buffer of the external application 80 can be acquired. The depth buffer acquisition method is not particularly limited. In the present exemplary embodiment, a depth buffer of external application 80 is acquired by rewriting a graphics library rendering command.

Also, in addition to the depth buffer, the external application monitoring unit 310 acquires a projection matrix and a model view matrix used for rendering. The projection matrix is a matrix representing internal parameters of a projection and is used for projecting 3D coordinates in the camera coordinate system on the image plane. Further, the model view matrix is a matrix representing the position and orientation of a CAD model and is used for transforming 3D coordinates in the reference coordinate system into 3D coordinates in the camera coordinate system. Since the external application monitoring unit 310 rewrites a rendering command, each time the external application 80 executes the rendering command, the depth buffer, the projection matrix, and the model view matrix are stored in a main memory as needed.

The depth image acquisition unit 320 acquires the depth buffer and the model view matrix of the external application 80 stored in the main memory as needed after the rendering command is executed by the external application 80. The depth image acquisition unit 320 then determines whether the depth buffer needs to be stored as the depth image for generating point group data.

Since the 3D point group generation unit 330 and the position-and-orientation estimation model generation unit 340 are the same as the 3D point group generation unit 140 and the position-and-orientation estimation model generation unit 150 of the first exemplary embodiment, the description of the units is omitted.

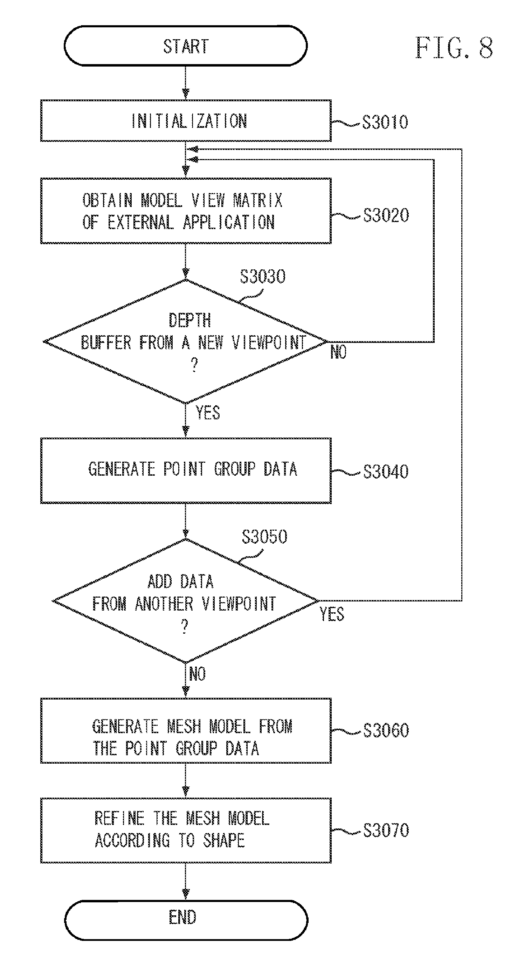

Next, a procedure of the method for generating a position-and-orientation estimation 3D model according to the present exemplary embodiment will be described. Fig. 8 is a flow chart illustrating the procedure of the method for generating a position-and-orientation estimation 3D model according to the present exemplary embodiment.

First, in step S3010, initialization is executed. In the initialization, the external application monitoring unit 310 rewrites a rendering command issued to the external application 80. First, based on a graphics library used by the external application 80, the external application monitoring unit 310 acquires the function address of the rendering command. Next, upon execution of rendering, the external application monitoring unit 310 rewrites the rendering command so that a depth buffer, a projection matrix, and a model view matrix are transferred to a main memory. Subsequently, the external application monitoring unit 310 uses the acquired function address to overwrite the graphics library rendering command. Thus, each time the external application 80 reads a graphics library rendering command, an overwritten rendering command is read, and the depth buffer, the projection matrix, and the model view matrix at this point are stored in a main memory as needed.

In step S3020, the external application monitoring unit 310 acquires a model view matrix of the external application 80 to determine whether to acquire a depth buffer. The model view matrix of the external application 80 is updated as needed each time the external application 80 executes a rendering command. After the model view matrix is acquired, the operation proceeds to step S3030.

In step S3030, the depth image acquisition unit 320 compares the model view matrix acquired in step S3020 with the model view matrix used to generate current 3D point group data. Through this comparison, the depth image acquisition unit 320 determines whether the depth buffer has been rendered from a new viewpoint and determines whether the depth buffer of the external application 80 needs to be stored. Further, when 3D point group data is not generated in the position-and-orientation estimation model generation apparatus 3, the depth image acquisition unit 320 stores the depth buffer of the external application 80, and the operation proceeds to step S3040.

When 3D point group data has already been generated, the depth image acquisition unit 320 determines whether the depth buffer of the external application 80 at the moment has been rendered from a viewpoint sufficiently different from the depth buffer used to generate 3D point group data. Namely, based on the above comparison of model view matrices, the depth image acquisition unit 320 determines whether the depth buffer has been rendered from a new viewpoint and then determines whether to store the depth buffer as a depth image to generate 3D point group data.

To determine whether the depth buffer has been rendered from a different viewpoint, difference in the rotational component and the translation component of the model view matrix is used. First, regarding the translation component, the L2 distance (Euclidean distance) of the translation component between the model view matrix of the external application 80 and the model view matrix used to generate 3D point group data is calculated. When 3D point group data is generated from a plurality of depth buffers, the L2 distance of the translation component is calculated for the model view matrices from all view points. Among the L2 distance values calculated, if the smallest value is equal to or greater than a certain threshold value, the depth image acquisition unit 320 determines that the depth buffer has been rendered from a viewpoint that is away from a stored viewpoint position and stores the depth buffer of the external application 80.

Regarding the rotational component, the difference of the angles formed by both rotational components is calculated. When the difference of the rotational components is equal to or greater than a threshold value, the depth image acquisition unit 320 determines that the depth buffer has been rendered based on an orientation different from a stored viewpoint position. The depth image acquisition unit 320 then stores the depth buffer of the external application 80.

According to the above processing, when the model view matrix of the depth buffer of the external application 80 is determined to be sufficiently different from a viewpoint position and orientation of the model view matrix stored in the position-and-orientation estimation model generation apparatus 3 (Yes in step S3030), the operation proceeds to step S3040. In step S3040, the depth buffer is referred to, and 3D point group data is generated. In contrast, when the model view matrix of the depth buffer of the external application 80 is determined to be sufficiently similar (No in step S3030), the operation goes back to step S3020, and steps S3020 to S3040 are repeated until a model is rendered from a different viewpoint.

Next, in step S3040, the 3D point group generation unit 330 uses the depth buffer acquired in step S3030 to generate 3D point group data representing the shape of the object to be observed. Since the operation in step S3040 is basically similar to that in step S1040 of the first exemplary embodiment, the description of the operation is omitted herein.

Next, when it is determined that point group data needs to be generated from another viewpoint in step S3050, the operation goes back to step S3020, and point group data from another viewpoint is generated. In the present exemplary embodiment, a CAD model is rendered based on the external application 80, the viewpoint position and orientation for rendering cannot be set with the position-and-orientation estimation model generation apparatus 3. Thus, to acquire a depth buffer rendered from another viewpoint, steps S3020 to S3050 need to be repeated until the viewpoint setting of the external application 80 changes and a model is rendered by the external application 80 based on a desired viewpoint position and orientation. However, when the user can operate the external application 80 arbitrarily, the user may operate the external application 80 to specify the depth buffer used for generating 3D point group data as needed. After 3D point group data in a desired range is generated, the operation proceeds to step S3060, and a mesh model is generated from the 3D point group data.

Next, in step S3060, the position-and-orientation estimation model generation unit 340 generates a position and orientation estimation mesh model from the 3D point group data generated in step S3040. Since the operation in step S3060 is basically similar to that in step S1060 of the first exemplary embodiment, the description thereof is omitted herein.

Next, in step S3070, the position-and-orientation estimation model generation unit 340 refines the mesh. Since the operation in step S3070 is basically similar to that in step S1070 of the first exemplary embodiment, the description thereof is omitted herein. Thus, the position and orientation estimation mesh model is generated, ending the operation of the flow chart of Fig. 8.

As described above, the position-and-orientation estimation model generation apparatus 3 of the second exemplary embodiment allows the external application 80 having a CAD model rendering ability to render a CAD model. Further, the position-and-orientation estimation model generation apparatus 3 acquires the depth buffer of the external application 80 to generate 3D point group data. Thus, the position-and-orientation estimation model generation apparatus 3 does not need to include a rendering engine therein. Therefore, a 3D model of an arbitrary model format within the capability of the external application 80 can be used to generate a position-and-orientation estimation model.

The position and orientation measurement apparatus carrying out position and orientation measurement using a position-and-orientation estimation model generated by the position-and-orientation estimation model generation apparatus 3 as well as the image synthesis apparatus generating an MR image based on the measurement results are similar to those in the first exemplary embodiment.

Thus, according to the first and second exemplary embodiments, 3D information representing the shape of an object to be observed is rendered, and based on the rendering results, 3D point group data based on the 3D information is generated. A position-and-orientation estimation model used for position and orientation estimation is generated from the generated 3D point group data. For example, by using a depth buffer obtained as a result of rendering the 3D information representing the shape of an object to be observed, a position-and-orientation estimation model can be generated. Thus, a position-and-orientation estimation model including surface information that can accommodate an object having a hidden surface or a curved surface can be generated. Further, based on a position and orientation estimation method, by omitting detailed shape information above a certain level of detail from 3D point group data, a position-and-orientation estimation model that enables stable feature association in position and orientation estimation can be generated.

Additionally, since a generated position-and-orientation estimation model includes detailed shape information such as normal information and apex information, the detailed shape information can be used for position and orientation estimation.

Further additionally, since a depth buffer is acquired from an external application according to the second exemplary embodiment, no rendering engine needs to be included inside the apparatus. Namely, since an external application can be used for rendering 3D information, position-and-orientation estimation models of various types of model formats can be generated.

In the above first and second exemplary embodiments, to generate point group data in step S1040, data concerning all pixels of the depth buffer is read. However, if depth values are stored with a needlessly high density in the depth buffer, the amount of the generated point group data may be too large.

Thus, when depth values are read from the depth buffer, some of the pixels may be omitted, instead of reading all the pixels. In this way, the amount of the generated point group data can be reduced. In addition, the operation in the subsequent steps can be executed at higher speed. The omission rate used when depth values are read from the depth buffer may be set based on prior knowledge about the model. Alternatively, a certain value may be set as the omission rate, irrespective of the model. An arbitrary method may be used as long as a finally generated position-and-orientation estimation model is sufficiently accurate to be used for position and orientation estimation.

In the first and second exemplary embodiments, all the generated 3D point group data is used to generate a position-and-orientation estimation model. However, when an object of which position and orientation are estimated is large and the user knows in advance that only a part of the object needs to be observed or when the user knows in advance that movement of the viewpoint of the image pickup device capturing an image of the object to be observed is small, there is no need to generate all the shapes of the object to be observed. Thus, when the observation portion of an object to be observed is limited, the point group data corresponding to the necessary portion alone is used to generate a position-and-orientation estimation model. In this way, data concerning a position-and-orientation estimation model and time and effort for model generation can be reduced.

In the first and second exemplary embodiments, a mesh model formed of apexes and surfaces is used as a position-and-orientation estimation model. However, a model generated as a position-and-orientation estimation model is not limited to such mesh model. For example, an implicit polynomial (IP) model in which surface information is described with an implicit polynomial may be used as a position-and-orientation estimation model. Since, with such IP model, a distance field from a surface can be easily calculated, the distance field of the IP model can be used to conduct an association between an object to be observed captured in an image and a position-and-orientation estimation model.

Further, since with an IP model, an occluding contour of a curved surface observed from a viewpoint can be calculated with a low calculation cost, use of an IP model is advantageous in a position and orientation estimation using edges. For example, a method discussed in Document 5 (Y. Ohtake, A. Belyaev, M. Alexa, "Sparse Low-degree Implicit Surfaces with Applications to High Quality Rendering, Feature Extraction, and Smoothing," Eurographics Symposiumon Geometry Processing (SGP2005), pp. 145-158, 2005) may be used as the method for generating an IP model from a point group. However, the IP model generation method is not limited to such example. An arbitrary method may be used as long as a point group is input and an IP model is then output.

Other Embodiments

Aspects of the present invention can also be realized by a computer of a system or apparatus (or devices such as a CPU or MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium) .

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A model generation apparatus (1) comprising:

   an acquisition unit (130) configured to acquire a depth image representing a distance between a certain point and an object to be observed per pixel with three-dimensional information representing a shape of the object to be observed;
   a point group generation unit (140) configured to generate three-dimensional point group data representing the shape of the object to be observed based on the depth image; and
   a model generation unit (150) configured to generate a three-dimensional model representing the shape of the object to be observed as surface information based on the three-dimensional point group data.

2. The model generation apparatus (1) according to claim 1, wherein the acquisition unit (130) acquires the depth image using a depth buffer obtained by rendering of a three-dimensional model representing the shape of the object to be observed.

3. The model generation apparatus (1) according to claim 1, wherein the acquisition unit (130) monitors a rendering command issued to an external application having a model rendering function and acquires a depth buffer as the depth image when the external application renders a model.

4. The model generation apparatus (1) according to claim 1, wherein the point group generation unit (140) generates the three-dimensional point group data by thinning out pixels forming the depth image.

5. The model generation apparatus (1) according to claim 1, wherein the point group generation unit (140) generates the three-dimensional point group data within a range used for position and orientation estimation.

6. The model generation apparatus (1) according to claim 1, wherein the model generation unit (150) generates a model based on the three-dimensional point group data within a range used for position and orientation estimation.

7. The model generation apparatus (1) according to claim 1, wherein the three-dimensional model is a mesh model formed of polygon patches.

8. The model generation apparatus (1) according to claim 7, wherein, when the number of apexes of a model generated based on the three-dimensional point group data is greater than a predetermined number, the model generation unit (150) reduces the data amount through polygon reduction.

9. The model generation apparatus (1) according to claim 1, wherein the three-dimensional model is an implicit polynomial model in which the surface information is described with an implicit polynomial.

10. A position and orientation calculation apparatus comprising:

    the model generation apparatus (1) according to claim 1;
    an input unit configured to input an image of an object to be observed captured by an image pickup device;
    a model feature extraction unit configured to extract a feature from a three-dimensional model which is generated by the model generation apparatus (1) and which represents a shape of the object to be observed;
    an image feature extraction unit configured to extract a feature corresponding to the feature extracted from the model feature extraction unit from the captured image; and
    a calculation unit configured to calculate a position and orientation of the image pickup device with respect to the object to be observed based on a correspondence relation between the model feature and the image feature.

11. An image processing apparatus comprising:

    the position and orientation calculation apparatus according to claim 10;

a virtual space image generation unit configured to generate a virtual space image based on a position and orientation of an image pickup device with respect to an object to be observed, the position and orientation being calculated by the position and orientation calculation apparatus;

an image synthesis unit configured to superimpose and synthesize the virtual space image on a captured image obtained by the image pickup device; and

a display unit configured to display the image synthesized by the image synthesis unit.

12. A model generation method comprising:

acquiring a depth image storing a distance between a predetermined point and an object to be observed per pixel with three-dimensional information representing a shape of the object to be observed;

generating three-dimensional point group data representing the shape of the object to be observed based on the depth image; and

generating a three-dimensional model representing the shape of the object to be observed as surface information based on the three-dimensional point group data.

13. A computer-readable storage medium storing a program causing a computer to execute the model generation method according to claim 12.

FIG. 1

POSITION-AND-ORIENTATION ESTIMATION MODEL
GENERATION APPARATUS — 1

110 — 3D MODEL STORAGE UNIT

120 — 3D MODEL RENDERING UNIT

130 — DEPTH IMAGE ACQUISITION UNIT

140 — 3D POINT GROUP GENERATION UNIT

150 — POSITION-AND-ORIENTATION ESTIMATION MODEL GENERATION UNIT

10

# FIG. 2

```
            ┌─────────────────────┐
            │        START        │
            └─────────────────────┘
                       │
                       ▼
            ┌─────────────────────┐
            │   INITIALIZATION    │──── S1010
            └─────────────────────┘
                       │
                       ▼
            ┌─────────────────────┐
            │   RENDER CAD MODEL   │──── S1020
            └─────────────────────┘
                       │
                       ▼
            ┌─────────────────────┐
            │  STORE DEPTH BUFFER  │──── S1030
            └─────────────────────┘
                       │
                       ▼
            ┌─────────────────────┐
            │ GENERATE POINT GROUP DATA │──── S1040
            └─────────────────────┘
                       │
                       ▼        S1050
                    ╱      ╲
                  ╱  RENDER THE ╲
                 ╱ CAD MODEL FROM ANOTHER ╲    YES
                ╲    VIEWPOINT ?    ╱──────────
                  ╲              ╱
                    ╲    ╱
                       │ NO
                       ▼
            ┌─────────────────────┐
            │ GENERATE MESH MODEL FROM │──── S1060
            │   THE POINT GROUP DATA   │
            └─────────────────────┘
                       │
                       ▼
            ┌─────────────────────┐
            │  REFINE THE MESH MODEL   │──── S1070
            │  ACCORDING TO SHAPE      │
            └─────────────────────┘
                       │
                       ▼
            ┌─────────────────────┐
            │         END          │
            └─────────────────────┘
```

# FIG. 3

**POSITION AND ORIENTATION MEASUREMENT APPARATUS** — 2

- 210 — POSITION-AND-ORIENTATION ESTIMATION MODEL STORAGE UNIT
- 230 — MODEL CHARACTERISTIC RENDERING UNIT
- 220 — IMAGE ACQUISITION UNIT
- 240 — IMAGE CHARACTERISTIC EXTRACTION UNIT
- 250 — POSITION AND ORIENTATION CALCULATION UNIT

20

30

# FIG. 4

# FIG. 5

```
          ┌─────────────────┐
          │      START      │
          └─────────────────┘
                   │
                   ▼
        ┌───────────────────────┐
        │    INITIALIZATION     │──── S2010
        └───────────────────────┘
                   │
                   ▼
        ┌───────────────────────┐
        │     INPUT AN IMAGE    │──── S2020
        └───────────────────────┘
                   │
                   ▼
        ┌───────────────────────┐
        │ EXTRACT MODEL         │──── S2030
        │ CHARACTERISTICS       │
        └───────────────────────┘
                   │
                   ▼
        ┌───────────────────────┐
        │ EXTRACT IMAGE         │──── S2040
        │ CHARACTERISTICS       │
        └───────────────────────┘
                   │
                   ▼
        ┌───────────────────────────────┐
        │ CALCULATE POSITION AND        │──── S2050
        │ ORIENTATION                   │
        └───────────────────────────────┘
                   │
                   ▼         S2060
                  ╱ ╲
                 ╱   ╲
                ╱ END ?╲──── NO
                ╲     ╱
                 ╲   ╱
                  ╲ ╱
                   │ YES
                   ▼
          ┌─────────────────┐
          │       END       │
          └─────────────────┘
```

# FIG.6

START

RENDER MODEL — S2110

EXTRACT EDGES — S2120

LABELING — S2130

CALCULATE EDGE ELEMENTS — S2140

CALCULATE 3D COORDINATES OF EDGE ELEMENTS — S2150

END

# FIG. 7

```
┌─────────────────┐
│   EXTERNAL      │ ～80
│  APPLICATION    │
└────────┬────────┘
         │
┌────────┼────────────────────────────────────────────────────────────────┐
│        │                                                              3   │
│        │                        POSITION-AND-ORIENTATION ESTIMATION MODEL │
│        │                        GENERATION APPARATUS                      │
│        │                                                                  │
│ ┌──────┴───────────┐                                                      │
│ │ EXTERNAL APPLICATION │ ～310                                            │
│ │ MONITORING UNIT  │                                                      │
│ └──────┬───────────┘              330          340                        │
│        │                                                                  │
│        │            ～320                                                 │
│ ┌──────┴───────┐  ┌──────────────┐  ┌─────────────────────┐              │
│ │ DEPTH IMAGE  │  │ 3D POINT GROUP│  │ POSITION-AND-ORIENTATION│          │
│ │ ACQUISITION  │──│ GENERATION UNIT│──│ ESTIMATION MODEL    │            │
│ │ UNIT         │  │              │  │ GENERATION UNIT     │              │
│ └──────────────┘  └──────────────┘  └─────────────────────┘              │
└──────────────────────────────────────────────────────────────────────────┘
```

EP 2 169 627 A2

FIG. 8

START

INITIALIZATION — S3010

OBTAIN MODEL VIEW MATRIX
OF EXTERNAL APPLICATION — S3020

S3030

DEPTH
BUFFER FROM A NEW VIEWPOINT
?

NO

YES

GENERATE POINT GROUP DATA — S3040

S3050

ADD DATA
FROM ANOTHER VIEWPOINT
?

YES

NO

GENERATE MESH MODEL FROM
THE POINT GROUP DATA — S3060

REFINE THE MESH MODEL
ACCORDING TO SHAPE — S3070

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007207251 A

### Non-patent literature cited in the description

- **T. Drummond ; R. Cipolla.** Real-time visual tracking of complex structures. *IEEE Transactions on Pattern Analysis and Machine Intelligence,* 2002, vol. 24 (7), 932-946
- **G. Bleser ; H. Wuest ; D. Stricker.** Online camera pose estimation in partially known and dynamic scenes. *Proc. The 5th IEEE/ACM International Symposium on Mixed and Augmented Reality (ISMAR06),* 2006, 56-65
- **Y. Ohtake ; A. Belyaev ; H. Seidel.** An integrating approach to meshing scattered point data. *Proceedings of the 2005 ACM symposium on Solid and physical modeling,* 13 June 2005, 61-69
- **K. Satoh ; S. Uchiyama ; H. Yamamoto ; H. Tamura.** Robust vision-based registration utilizing bird's-eye view with user's view. *Proc. The 2nd IEEE/ACM International Symposium on Mixed and Augmented Reality (ISMAR03),* 2003, 46-55
- **Y. Ohtake ; A. Belyaev ; M. Alexa.** Sparse Low-degree Implicit Surfaces with Applications to High Quality Rendering, Feature Extraction, and Smoothing. *Eurographics Symposiumon Geometry Processing (SGP2005),* 2005, 145-158